# EUROPÄISCHE PATENTSCHRIFT

(11) **EP 1 132 641 B1**
(45) Veröffentlichungstag und Bekanntmachung des Hinweises auf die Patenterteilung: **26.03.2014**
(21) Anmeldenummer: 01105198.4
(22) Anmeldetag: 03.03.2001
(51) Int. Cl.: F16D 65/10, F16D 69/00, F16D 65/12, F16D 69/02

(54) **Reibeingriffsvorrichtung**
Friction device
Dispositif de friction

(30) Priorität: 07.03.2000 DE 10011018
(43) Veröffentlichungstag der Anmeldung: 12.09.2001
(73) Patentinhaber: DEERE & COMPANY, Moline, Illinois 61265-8098 (US)
(72) Erfinder: Rheinheimer, Günter, 67157 Wachenheim (DE); Reis, Viktor, Dr., 68163 Mannheim (DE); Elsner, Wolfram, Dr., 70736 Fellbach (DE)
(74) Vertreter: Magin, Ludwig Bernhard

(56) Entgegenhaltungen:
- EP-A- 0 879 975
- EP-A1- 0 002 581
- WO-A-94/15112
- DE-A- 19 644 835
- US-A- 5 339 931

## Beschreibung

Die Erfindung betrifft eine Reibeingriffsvorrichtung, insbesondere eine Bremse oder eine Kupplung für Kraftfahrzeuge. Die Reibeingriffsvorrichtung enthält wenigstens ein erstes Bauteil und wenigstens ein zweites Bauteil, die relativ zueinander beweglich sind, indem in der Regel eines der Bauteile umläuft und das andere Bauteil in Ruhe bleibt. Das erste Bauteil weist wenigstens eine Anlauffläche auf und besteht wenigstens in seinem an die Anlauffläche angrenzenden Bereich aus einem gut wärmeleitenden Material, nämlich aus Aluminium oder eine Aluminiumlegierung. Das zweite Bauteil enthält ein Tragteil, auf das durch Kleben, Nieten und dergleichen wenigstens ein Reibbelag aufgebracht ist. Zur Herstellung eines Reibeingriffs beim Bremsen oder Kuppeln läßt sich die Reibfläche des Reibbelags auf die Anlauffläche drücken.

Von entscheidender Bedeutung für die Lebensdauer und Belastbarkeit einer Bremse oder Kupplung eines Kraftfahrzeuges, z.B. eines Traktors oder PKWs, ist die schnelle Wärmeabfuhr aus der Reibkontaktstelle während der Verzögerung (Bremsung, Kupplung), um so die Spitzentemperatur unterhalb einer spezifischen kritischen Temperatur zu halten, bei der die Bremse oder Kupplung Schaden nehmen und in ihrer Wirkung beeinträchtigt oder gar ausfallen kann.

Durch die steigenden Fahrgeschwindigkeiten insbesondere im Traktorenbau fallen immer höhere Bremsenergien in Form von Wärme an der Betriebs- und Hilfsbremse an. Wegen der auftretenden höheren Leistungsdichten und der damit verbundenen Temperaturprobleme wird die Lebensdauer der Bauteile, insbesondere der Bremsbeläge, zunehmend gefährdet bzw. verkürzt.

Üblicherweise werden Stahl oder Gusseisen für Bremsen als Gegenwerkstoff zu den Reibbelägen von Bremsbändern oder Gegenlamellen eingesetzt. Dies führt zu einer schlechten Wärmeabfuhr aus der Reibkontaktstelle und zu einem hohen Gewicht, was insbesondere bei künftigen Leichtbau-Fahrzeugkonzepten in hohem Maße unerwünscht ist.

Darüber hinaus sind mehrteilige Bremstrommeln bekannt, bei denen ein Reibring als eigenständiges Bauteil verdrehfest an der radial innenliegenden Seite einer topfförmigen Bremstrommel befestigt ist. So offenbart die US-A-3,005,259 eine Bremstrommel aus Aluminium mit einem Reibring aus einem Gußeisenwerkstoff, wobei der Reibring mittels radialer Hinterschneidungen verdrehfest an der Bremstrommel befestigt ist. Die Bremstrommel ist aus Gründen der Gewichtsersparnis aus Aluminium hergestellt. Der Reibring besteht aber aus Gußeisenwerkstoff und kann die schnelle Wärmeabfuhr aus der Reibkontaktfläche nicht gewährleisten.

Die EP 0 879 975 A1 beschreibt eine Bremstrommel-Baugruppe, bestehend aus einer topfförmigen Bremstrommel aus Aluminium, die verdrehfest an einer Nabe einer Fahrzeugachse befestigt ist, sowie einem verdrehsicher an der Bremstrommel angeordneten Reibring aus Metal-Matrix-Composite-Werkstoff (MMC). Durch den MMC-Werkstoff erhalten diese Bremstrommel-Baugruppen eine sehr hohe Belastbarkeit und thermische Resistenz. Bremstrommeln aus Aluminium haben auch Gewichtsvorteile. Die bekannten Bremstrommel-Baugruppen sind jedoch wegen der Verwendung des MMC-Werkstoffs sehr teuer und kompliziert bei der Herstellung.

Des weiteren beschreibt die DE 42 43 516 A1 einen Bremsbelag für Bremsen mit Aluminiumbremsscheiben. Um Festigkeitsprobleme der Aluminiumbremsscheibe bei Temperaturen oberhalb von 450 °C zu vermeiden, soll das Reibmaterial so ausgewählt werden, daß sein Reibbeiwert bis zu einer Temperatur von 400 °C gleichbleibend ist und bei höheren Temperaturen absinkt. Derartig ausgebildete Bremsen werden jedoch nur für relativ geringe Bremskräfte empfohlen.

Die WO94/27058 befasst sich mit der Zusammensetzung eines Bremsklotzes aus einem mit porösem Kupferpulver modifizierten Reibungsmaterial. Es wird eine Gruppe von Werkstoffzusammensetzungen zur Verwendung bei mit Al-MMC-Rotoren verträglichen Bremsklötzen angegeben. Die Bremsklötze enthalten bis zu 15% Phenolharz, das als Bindemittel für die Komponenten dient, bis zu 12% eines organischen Reibungsmodifizierer, wie Kautschukabfälle, Cellulose, Latex Kork und/oder Cashewnußteilchen, welcher der Glasurbildung und der Förderung der Reibungsstabilität dient, sowie bis zu 5 % Aramidfasern, die als Verarbeitungshilfe dienen und die Verschleißfestigkeit erhöhen sollen. Die Hauptbestandteile sind jedoch anorganische Komponenten. Diese enthalten bis zu 60% anorganische Reibungsmodifizierer, die der Verbesserung der Verschleißfestigkeit und Wärmestabilität und der Stabilisierung der Reibung dienen. Die Hauptbestandteile umfassen des weiteren anorganische Schleifmittelanteile zur Entwicklung eines hohen und stabilen Reibkoeffizienten, Graphit als Schmierstoff sowie Glasfasern, durch welche die Abriebsfestigkeit bei dynamischen Bremsbelastungen gesteigert werden soll. Als besonders vorteilhaft wird die Beimischung von bis zu 18% porösen Kupfers angesehen, durch welches die Ausbildung einer Schutzglasur auf der Aluminiumoberfläche unterstützt werden soll. Diese Schutzglasur soll eine hohe und stabile Reibung sowie die Verschleißfestigkeit fördern. Die Zusammensetzung des Bremsklotzes soll derart optimiert werden, dass beim Zusammenwirken mit einem AL-MMC-Rotor möglichst gute Eigenschaften hinsichtlich Reibungskoeffizienten, Kratzfestigkeit, und Abriebsfestigkeit erzielt werden. Die beschriebene Reibpaarung aus MMC-Werkstoffen und der speziellen Bremsklotz-Zusammensetzung ist relativ teuer.

Die JP 11325137 A beschreibt eine Scheibenbremsanordnung, bei der die Oberflächentemperatur eines Aluminiumrotors bei einem geringen Kühlmittelbedarf ständig unter optimalen Bedingungen gehalten werden soll. Zu diesem Zweck ist eine Kühlmitteldüse auf den Rotor gerichtet. Die aufgespritzte Kühlmittelmenge wird in Abhängigkeit der Rotordrehzahl und der Rotortemperatur gesteuert.

Die DE 196 44 835 A offenbart eine Bremseinheit für ein Automatikgetriebesystem, zu der eine Bremstrommel und ein Bremsband gehören. Auf der Bremstrommel, die aus einer leichtgewichtigen Metalllegierung bestehen kann, befindet sich ein Bremsbelag, der u. a. aus Papier besteht. Der Bremsbelag wirkt beim Bremsen mit dem Bremsband, welches aus Stahl besteht, zusammen. Die Bremstrommel enthält eine Mehrzahl von Bohrungen, die es gestatten, dass ein flüssiges Schmiermittel vom Inneren der Bremstrommel zu der äußeren Oberfläche fließt. Da sich auf der Bremstrommel ein isolierender Reibbelag befindet, der eine rasche Wärmeabfuhr in die Bremstrommel verhindert, können beim starken Abbremsen im Bereich des Reibbelags hohe Temperaturen und die damit verbunden nachteiligen Folgen auftreten.

Die der Erfindung zugrunde liegende Aufgabe wird darin gesehen, eine Reibeingriffsvorrichtung der eingangs genannten Art anzugeben, die zur Aufnahme hoher Bremsenergien geeignet ist, eine hohe Lebensdauer im Zusammenhang mit einer sehr guten Wärmeabfuhr aus der Reibkontaktstelle aufweist, kostengünstig herstellbar und hinreichend steif ist, um hohe Kräfte und Momente aufnehmen und übertragen zu können.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Es hat sich herausgestellt, daß insbesondere für Reibeingriffsvorrichtungen, bei denen hohe Energiedichten auftreten, die Paarung von Anlaufflächen aus Aluminium oder einer Aluminiumlegierung einerseits mit Reibbelägen aus einem organischen Werkstoff andererseits die gestellten Anforderungen erfüllen kann. Die von der Reibeingriffsvorrichtung aufgenommene Leistungsdichte kann gegenüber bisherigen Vorrichtungen erheblich erhöht werden. Einerseits wird durch die Verwendung von Aluminium oder einer Aluminiumlegierung anstelle der sonst üblichen Werkstoffe wie Stahl und Gusseisen der Anstieg der Spitzentemperatur im Reibkontakt um etwa 30% gesenkt. Damit ist die Reibeingriffsvorrichtung bei einem Reibeingriff, z. B. beim Bremsen, höher belastbar bzw. ihre Lebensdauer wird bei gegebener Last deutlich erhöht. Hierdurch kann eine Zeitfestigkeit in eine Dauerfestigkeit umgewandelt werden. Andererseits können handelsübliche, preiswerte, temperaturempfindliche organische Materialien, die bei schlechter Wärmeabfuhr verbrennen könnten, zum Einsatz kommen, ohne daß sich ihre Temperaturempfindlichkeit nachteilig auswirkt. Vergrößerte Reibkontaktflächen und damit ein größerer Bauraum und ein erhöhtes Gewicht für die Reibeingriffsvorrichtung können vermieden werden.

Bei trockenen Bremsen, insbesondere bei Verwendung von Reibbelägen aus organischem Material, kann ein Abrieb des Belages in der Kontaktzone auftreten. Das Abriebsmaterial kann sich in die Reibfläche, insbesondere in die Aluminiumoberfläche, einnisten und diese aufrauen, was zu erhöhtem Verschleiß und schließlich zur Zerstörung der Reibfläche und des Reibbelages führen kann. Erfindungsgemäß lassen sich diese Verschleißerscheinungen wirkungsvoll vermeiden, indem das umlaufende erste und/oder zweite Bauteil wenigstens teilweise in einen Schmiermittelsumpf eintaucht, so dass die Reibfläche ständig benetzt ist.

Die erfindungsgemäße Reibeingriffsvorrichtung hat den besonderen Vorteil, dass bei starker Belastung, beispielsweise beim Auftreten hoher Leistungsdichten infolge starken Abbremsens innerhalb 1 bis 3 Sekunden, in kürzester Zeit ein sehr hoher Anteil der entstehenden Wärmeleistung in das gut wärmeleitende Bauteil abgeleitet und von diesem aufgenommen und zwischengespeichert wird (Selbstkühlung). Damit lassen sich Temperaturspitzen im Bereich der Reibflächen vermeiden. Die in dem Bauteil gespeicherte Wärme wird dann durch das Kühlmittel aus der Reibeingriffsvorrichtung abgeführt. Diese Wärmeabfuhr erfolgt naturgemäß innerhalb viel größerer Zeiträume als die beschriebene Wärmeabfuhr mittels Wärmeleitung (Selbstkühlung), da die Kühlmittelmenge und der Wärmeübergang zwischen der Reibeingriffsfläche und dem Kühlmittel begrenzt sind und eine sehr rasche Wärmeabfuhr nicht zulassen.

Schwere, schnellfahrende Arbeitsmaschinen, insbesondere landwirtschaftliche Schlepper, die auf Fahrgeschwindigkeiten von 50 km/h und darüber ausgelegt werden, erfordern leistungsstarke Bremsen. Aus konstruktiven Gründen steht hierfür in der Regel nur ein relativ kleiner Bauraum zur Verfügung, so daß die Bremsen auf hohe Leistungsdichten ausgelegt werden müssen. Beispielsweise soll bei solchen Schleppern die Feststellbremse (Handbremsen) eine mittlere Wärmeleistungsdichte von 3 W/mm² nicht überschreiten. Bei der Betriebsbremse (Fußbremse) liegt dieser Wert bei 1 W/mm². Diese Grenzwerte können mit einer erfindungsgemäßen Reibeingriffsvorrichtung überschritten werden.

Für den im wesentlichen bzw. überwiegend aus organischem Material bestehenden Reibbelag können unterschiedliche im Handel erhältliche Werkstoffe verwendet werden, wie sie bisher für die Verwendung mit Stahl- oder Gusseisentrommeln angeboten werden. Besonders geeignet sind Materialien mit einem hohen Anteil an Zellulosefasern und mit organischen Reibungsmodifizierern. Es ist aus Kostengründen von Vorteil als Reibbelag im wesentlichen Papierbeläge zu verwenden. Diese können mit einem Bindemittel getränkt sein. Es eignet sich beispielsweise ein Reibbelag des Typs HM200E der Fa. Miba, Österreich, der einen hohen statischen und dynamischen Reibbeiwert aufweist. Zweckmäßigerweise ist der Reibbeiwert des Reibbelages größer als 0,1.

Vorzugsweise handelt es sich bei dem Schmiermittel um ein Schmieröl, insbesondere ein übliches Hydrauliköl, ein Bremsöl oder ein Getriebeöl. Viele Fahrzeuge enthalten bereits Schmiermittelkreisläufe. In diese Kreisläufe kann auf vorteilhafte Weise die Schmierung der Reibeingriffsvorrichtung einbezogen werden. Es ist zweckmäßig das in einem Kreislauf geführte Schmiermittel auf übliche Weise zu kühlen.

Gemäß einer weiterer bevorzugten Ausgestaltung der Erfindung wird eine Aluminiumlegierung mit einem Wärmeleitwert eingesetzt, der größer als 120 W/m°K, vorzugsweise größer als 150 W/m°K ist. Es eignet sich beispielsweise als Aluminiumlegierung AlSi9Cu3. Damit ist der Wärmeleitwert deutlich höher als der üblicher Bremskomponenten und gewährleistet einen raschen Wärmeabfluß von der Reibfläche.

Es ist vorteilhaft, die aus Aluminium oder Aluminiumlegierung bestehende Anlauffläche (Reibfläche) des ersten Bauteils, einer Oberflächenbehandlung durch Hartanodisieren zu unterziehen. Damit wird die Oberfläche innerhalb einer Schichtdicke von einigen µm verschleißfester, so daß allenfalls der Belag verschleißt nicht aber die Aluminiumanlauffläche. Bei naßlaufenden Reibeingriffsvorrichtungen ist diese Maßnahme meist entbehrlich.

Erfindungsgemäß ist die Lösung bei Bremsen mit Bremstrommel einzusetzen, wobei das aus Aluminium oder Aluminiumlegierung bestehende erste Bauteil die Bremstrommel ist. Es kann sich bei dieser Bremse um eine Hilfsbremse (Handbremse), die einer Notverzögerung des Fahrzeugs und dessen Feststellen dient, handeln. Hierbei ist um die gut wärmeleitende Bremstrommel ein Bremsband geschlungen, welches den Reibbelag aus organischem Werkstoff trägt. Die Bremstrommel ist in einem Gehäuse angeordnet, welches teilweise mit Getriebeöl gefüllt ist, so daß die Bremstrommel im Öl läuft und die Reibfläche ständig benetzt ist.

Da im wesentlichen die der Reibkontaktstelle am nächsten liegenden Materialschichten für die schnelle Wärmeabfuhr entscheidend sind, kann die Bremstrommel als (zweiteiliges) Verbundbauteil ausgeführt werden, indem die tragende Struktur aus Stahl oder Gusseisen hergestellt und mit einem Reibelement (Reibring) aus Aluminium drehfest gepaart wird. Dadurch können die Festigkeit und Kostenvorteile von Stahl/Gusseisen gegenüber Aluminium oder Aluminiumlegierungen in Verbindung mit der besseren Wärmeabfuhr der Aluminiumwerkstoffe genutzt werden. Der Reibbelag im Bremsband besteht aus organischem Werkstoff, z.B. Papier.

Ein weiterer besonders bevorzugter Anwendungsbereich ist die Betriebsbremse. Hier ist das zweite Bauteil eine rotierende Vollbremsscheibe, die in ihrem radial äußeren Bereich auf beiden Seiten wenigstens einen Bremsbelag trägt. Den Bremsscheiben sind drehfest angeordnete Metallringe zugeordnet, von denen wenigstens einer axial verschiebbar ist, um den Reibeingriff mit den Bremsbelägen herzustellen. Die Metallringe bestehen aus Aluminium oder einer Aluminiumlegierung.

Die Erfindung läßt sich analog anstelle einer als Scheibenbremse ausgebildeten Betriebsbremse auch bei Lamellenbremse oder Lamellenkupplung anwenden.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Querschnittsdarstellung einer erfindungsgemäß ausgebildeten Feststellbremse,
- Fig. 2: die Querschnittsdarstellung einer weiteren erfindungsgemäß ausgebildeten Feststellbremse und
- Fig. 3: die Querschnittsdarstellung einer Betriebsbremse.

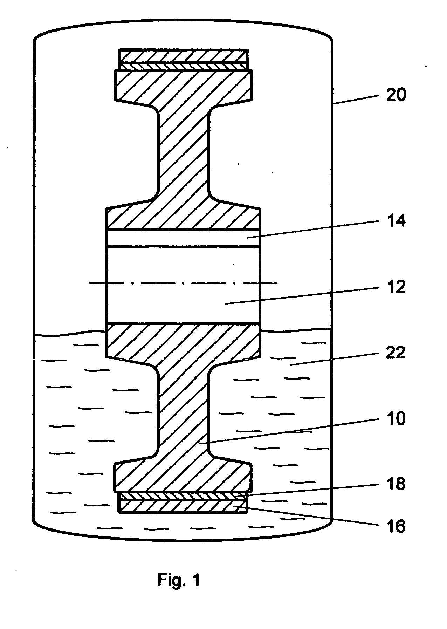

Aus Fig. 1 geht eine Feststellbremse mit einer Bremstrommel 10 hervor. Die Bremstrommel 10 ist aus der gut wärmeleitenden Aluminiumlegierung AlSi9Cu3 (9% Silizium und 3% Kupfer) gefertigt. Sie enthält eine zentrale Bohrung 12 mit Nut 14, die der drehfesten Montage auf einer drehbaren Welle eines nicht näher gezeigten Fahrzeugantriebsstranges dient. Um die zylindrische Umfangsfläche der Bremstrommel ist auf übliche Weise ein Bremsband 16 gelegt, welches aus Stahl besteht und dessen Enden festgelegt sind und sich nicht mit der Bremstrommel 10 mitdrehen. Auf der der Bremstrommel 10 zugewandten inneren Seite des Bremsbandes 16 ist ein organischer Reibbelag 18 befestigt, der aus Papier besteht. Es handelt sich um den Belag HM200E der Fa. Miba, Österreich. Die Bremstrommel 10 befindet sich in einem Gehäuse 20, welches teilweise mit einem Hydrauliköl 22 gefüllt ist. Das in einem nicht näher gezeigten Kreislauf, der u. a. einen Ölkühler enthält, umgepumpte Hydrauliköl 22 benetzt die Umfangsfläche der Bremstrommel 10.

Zum Bremsen wird das Bremsband 16 gespannt, so daß es eng an der Trommelumfangsfläche anliegt und der Reibbelag 18 auf die als Anlauffläche ausgebildete Trommelumfangsfläche gepreßt wird. Durch den Reibeingriff zwischen ruhendem Bremsbelag 18 und dem sich drehenden Bremszylinder 10 wird letzterer abgebremst.

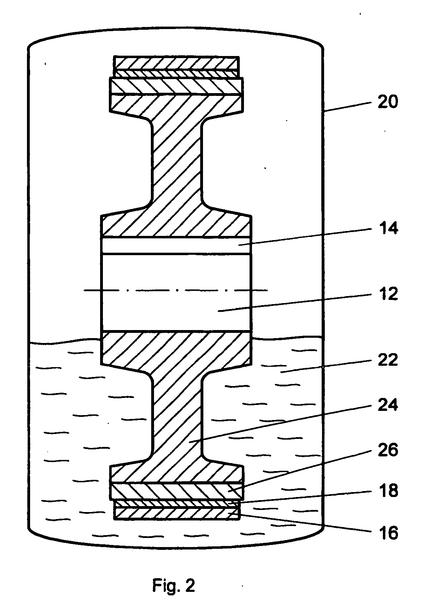

Die in Fig. 2 dargestellte Feststellbremse unterscheidet sich von der in Fig. 1 dargestellten Bremse lediglich hinsichtlich der Bremstrommel. Es wurden in den Figuren 1 und 2 identische Bauteile mit denselben Bezugsziffern belegt. Gemäß Fig. 2 ist die Bremstrommel als zweiteiliges Verbundbauteil ausgebildet, bei dem die radial innenliegende tragende Struktur 24 aus Stahl oder Gusseisen hergestellt ist. Auf die zylindrische Umfangsfläche der tragenden Struktur 24 ist ein Ring 26 aus Aluminiumlegierung aufgepreßt und drehfest verbunden, z. B. über Klauen, dessen äußere Anlauffläche mit dem Reibbelag 18 zusammenwirkt.

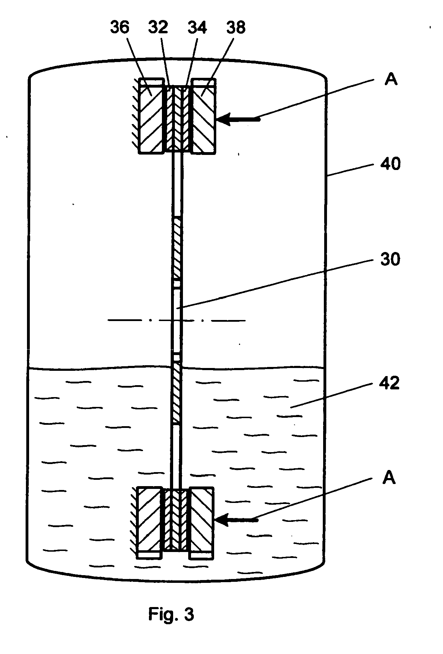

Aus Fig. 3 geht eine Betriebsbremse mit einer Bremsscheibe hervor, welche drehfest auf einer nicht näher dargestellten Welle des Antriebsstranges, insbesondere im Bereich der Radachsen, angeordnet ist. Die Bremsscheibe ist als im wesentlichen scheibenförmiger Stahlträger 30 ausgebildet, in dessen radial außenliegenden Bereichen auf beiden Seiten ringförmige Bremsbeläge 32, 34 aufgeklebt sind. Bei den Bremsbelägen 32, 34 kann es sich auch hier um Beläge HM200E der Fa. Miba, Österreich handeln. Anstelle der ringförmigen Bremsbeläge 32, 34 können auf jeder Seite des Stahlträgers 30 auch mehrere Bremsbelagssegmente befestigt sein.

Auf beiden Seiten der Bremsscheibe steht den Bremsbelägen 32, 34 je ein Metallring 36, 38 mit einer dem Bremsbelag zugewandten Anlauffläche gegenüber. Die Metallringe 36, 38 bestehen aus Aluminium oder aus einer Aluminiumlegierung, beispielsweise aus AlSi9Cu3. Der in Fig. 3 links dargestellte Metallring 36 ist ortsfest mit dem Bremsgehäuse 40 verbunden. Der rechte Metallring 38 ist gegen verdrehen gesichert und läßt sich auf übliche Weise durch einen nicht dargestellten Hydraulikkolben in axialer Richtung (Pfeil A) verschieben.

Auch in dem Beispiel gemäß Fig. 3 befinden sich die Elemente der Bremse in einem geschlossenen Gehäuse, das teilweise mit einem Hydrauliköl 42 gefüllt ist, so daß wenigstens die Bremsbeläge 32, 34 der Bremsscheibe in das Hydrauliköl eintaucht und von diesem benetzt werden.

Beim Bremsen wird der rechte Metallring 38 in Pfeilrichtung axial nach links gedrückt, so daß die Bremsbeläge 32, 34 der Bremsscheibe zwischen dem linken Metallring 36 und dem rechten Metallring 38 eingespannt werden. Der Reibeingriff zwischen den ruhenden Metallringen 36, 38 und den rotierenden Bremsbelägen 32, 34 führt zum Abbremsen der Welle des Antriebsstranges und damit zum Abbremsen des Fahrzeugs.

In Fig. 3 sind im wesentlichen eine sich drehende Bremsscheibe mit Bremsbelägen 32, 34 und zwei zugehörige feststehende Metallringe 36, 38 dargestellt. Es ist auch möglich mehrere Bremsscheiben mit Bremsbelägen, denen jeweils Metallringe zugeordnet sind, in einem Paket anzuordnen, wie es bei Fahrzeuglamellenkupplungen üblich ist. Anstelle der in Fig. 3 dargestellten drehfesten Metallringe können diese auch drehbar angeordnet sein und mit zugehörigen feststehenden Bremsbelägen zusammenwirken.

Auch wenn die Erfindung lediglich anhand mehrerer Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So ist beispielsweise die Auswahl des Werkstoffes für Bremstrommel und Reibring sowie auch die Auswahl des Werkstoffes des Bremsbandes mit Reibbelag nicht auf die beschriebenen Werkstoffe beschränkt.

## Patentansprüche

1. Reibeingriffsvorrichtung, insbesondere Bremse oder Kupplung für Kraftfahrzeuge, mit wenigstens einem ersten Bauteil (10) und wenigstens einem zweiten Bauteil (16, 18), die relativ zueinander beweglich sind, wobei das erste Bauteil (10) wenigstens eine Anlauffläche aufweist, wobei das zweite Bauteil ein mit einem aus einem organischen Material bestehenden Reibbelag (18) versehenes Tragteil (16) enthält und sich zur Herstellung eines Reibeingriffs beim Bremsen oder Kuppeln die Reibfläche des Reibbelags (18) auf die Anlauffläche des ersten Bauteils (10) pressen lässt, und wobei das erste und zweite Bauteil (10, 16, 18) wenigstens teilweise in einem Schmiermittel umläuft, **dadurch gekennzeichnet, dass** das erste Bauteil als Bremstrommel (10) ausgebildet ist, die wenigstens in ihrem an die Anlauffläche angrenzenden Bereich aus Aluminium oder einer Aluminiumlegierung besteht, und dass das Tragteil als Bremsband (16) ausgebildet ist.

2. Vorrichtung nach Anspruch 1, **dadurch gekennzeichnet, dass** der Reibbelag (18) im wesentlichen aus Papier besteht.

3. Vorrichtung nach Anspruch 1 oder 2, **dadurch gekennzeichnet, dass** der Reibbelag (18) einen Reibbeiwert größer als 0,1 aufweist.

4. Vorrichtung nach einem der Ansprüche 1 bis 3, **dadurch gekennzeichnet, dass** das Schmiermittel ein Schmieröl, insbesondere ein Hydrauliköl, ein Bremsöl oder ein Getriebeöl ist.

5. Vorrichtung nach einem der Ansprüche 1 bis 4, **dadurch gekennzeichnet, dass** das Schmiermittel in einem Kreislauf geführt und gekühlt wird.

6. Vorrichtung nach einem der Ansprüche 1 bis 5, **dadurch gekennzeichnet, dass** eine Aluminiumlegierung mit einem Wärmeleitwert größer als 120 W/m°K, vorzugsweise größer als 150 W/m°K eingesetzt wird.

7. Vorrichtung nach einem der Ansprüche 1 bis 6, **dadurch gekennzeichnet, dass** als Aluminiumlegierung AlSi9Cu3 eingesetzt wird.

8. Vorrichtung nach einem der Ansprüche 1 bis 7, **dadurch gekennzeichnet, dass** die Reibfläche des ersten Bauteils (10) einer Oberflächenbehandlung durch Hartanodisieren unterzogen ist.

9. Vorrichtung nach einem der Ansprüche 1 bis 8, **dadurch gekennzeichnet, dass** die Bremstrommel (10) als Verbundbauteil ausgebildet ist, dessen tragende Struktur (24) aus Stahl oder Gusseisen besteht, die mit einem Reibelement (26) aus Aluminium oder Aluminiumlegierung drehfest gepaart ist.

## Claims

1. Frictional engagement device, in particular brake or clutch for motor vehicles, with at least one first component (10) and at least one second component (16, 18) which are movable relative to each other, wherein the first component (10) has at least one run-on surface, wherein the second component contains a supporting part (16) provided with a friction lining (18) composed of an organic material and, in order to produce a frictional engagement during the braking or application of the clutch, can press the frictional surface of the friction lining (18) onto the run-on surface of the first component (10), and wherein the first and second component (10, 16, 18) at least partially revolve in a lubricant, **characterized in that** the first component is designed as a brake drum (10) which, at least in the region thereof adjacent to the run-on surface, is composed of aluminium or an aluminium alloy, and **in that** the supporting part is designed as a brake band (16).

2. Device according to Claim 1, **characterized in that** the friction lining (18) is substantially composed of paper.

3. Device according to Claim 1 or 2, **characterized in that** the friction lining (18) has a coefficient of friction greater than 0.1.

4. Device according to one of Claims 1 to 3, **characterized in that** the lubricant is a lubricating oil, in particular a hydraulic oil, a brake oil or a gear oil.

5. Device according to one of Claims 1 to 4, **characterized in that** the lubricant is guided and cooled in a circuit.

6. Device according to one of Claims 1 to 5, **characterized in that** an aluminium alloy with a thermal conductivity value greater than 120 W/m°K, preferably greater than 150 W/m°K, is used.

7. Device according to one of Claims 1 to 6, **characterized in that** AlSi9Cu3 is used as the aluminium alloy.

8. Device according to one of Claims 1 to 7, **characterized in that** the frictional surface of the first component (10) is subjected to a surface treatment by hard anodizing.

9. Device according to one of Claims 1 to 8, **characterized in that** the brake drum (10) is designed as a composite component, the supporting structure (24) of which is composed of steel or cast iron and is paired with a friction element (26) made of aluminium or aluminium alloy for rotation therewith.

## Revendications

1. Dispositif d'engagement par friction, en particulier frein ou embrayage de véhicules automobiles, comprenant au moins un premier composant (10) et au moins un deuxième composant (16, 18), qui sont déplaçables l'un par rapport à l'autre, le premier composant (10) présentant au moins une surface de butée, le deuxième composant contenant une partie de support (16) pourvue d'une garniture de friction (18) constituée d'un matériau organique et la surface de friction de la garniture de friction (18) pouvant être pressée sur la surface de butée du premier composant (10) en vue d'établir un engagement par friction lors du freinage ou de l'embrayage, et le premier et le deuxième composant (10, 16, 18) tournant au moins en partie dans un lubrifiant, **caractérisé en ce que** le premier composant est réalisé sous forme de tambour de frein (10) qui, au moins dans sa région adjacente à la surface de butée, se compose d'aluminium ou d'un alliage d'aluminium, et **en ce que** la partie de support est réalisée sous forme de ruban de frein (16).

2. Dispositif selon la revendication 1, **caractérisé en ce que** la garniture de friction (18) se compose essentiellement de papier.

3. Dispositif selon la revendication 1 ou 2, **caractérisé en ce que** la garniture de friction (18) présente un coefficient de friction supérieur à 0,1.

4. Dispositif selon l'une quelconque des revendications 1 à 3, **caractérisé en ce que** le lubrifiant est une huile de lubrification, en particulier une huile hydraulique, une huile pour freins ou une huile de boîte de vitesses.

5. Dispositif selon l'une quelconque des revendications 1 à 4, **caractérisé en ce que** le lubrifiant est guidé et refroidi dans un circuit.

6. Dispositif selon l'une quelconque des revendications 1 à 5, **caractérisé en ce que** l'on utilise un alliage d'aluminium ayant une conductivité thermique supérieure à 120 W/m°K, de préférence supérieure à 150 W/m°K.

7. Dispositif selon l'une quelconque des revendications 1 à 6, **caractérisé en ce que** l'on utilise comme alliage d'aluminium de l'AlSi9Cu3.

8. Dispositif selon l'une quelconque des revendications 1 à 7, **caractérisé en ce que** la surface de friction du premier composant (10) est soumise à un traitement de surface par anodisation dure.

9. Dispositif selon l'une quelconque des revendications 1 à 8, **caractérisé en ce que** le tambour de frein (10) est réalisé sous forme de composant composite dont la structure de support (24) se compose d'acier ou de fonte, laquelle structure est appariée de manière solidaire en rotation à un élément de friction (26) en aluminium ou en alliage d'aluminium.
